# EUROPEAN PATENT APPLICATION

(11) **EP 4 715 843 A1**
(43) Date of publication of application: **25.03.2026**
(21) Application number: 24806833.0
(22) Date of filing: 27.02.2024
(51) Int. Cl.: H01B 1/06, C25B 13/04, H01B 1/08, H01M 8/12, H01M 8/1246

(54) **PROTON CONDUCTOR, MEMBRANE ELECTRODE ASSEMBLY, ELECTROCHEMICAL CELL AND FUEL CELL STACK**

(30) Priority: 15.05.2023 JP 2023080068
(71) Applicant: Panasonic Holdings Corporation, Kadoma-shi, Osaka 571-8501 (JP)
(72) Inventor: MIKAMI Yuichi, Kadoma-shi, Osaka 571-0057 (JP); NUNOO Kosuke, Kadoma-shi, Osaka 571-0057 (JP); KUROHA Tomohiro, Kadoma-shi, Osaka 571-0057 (JP); OKUYAMA Yuji, Miyazaki-shi, Miyazaki 889-2192 (JP)
(74) Representative: Grünecker Patent- und Rechtsanwälte PartG mbB
(86) International application number: PCT/JP2024/006947
(87) International publication number: WO 2024/236878

(57) **Abstract**

A proton conductor of the present disclosure contains a compound represented by a chemical formula BaₐZr_{1-x-y}YbₓCu_{y}O_{3-δ}. In the chemical formula, 0.95 ≤ a ≤ 1.05, 0.1 ≤ x ≤ 0.4, 0.01 < y < 0.20, and 0 < δ ≤ 0.65 are satisfied. An electrolyte film 10 of the present disclosure contains the proton conductor of the present disclosure.

## Description

### Technical Field

The present disclosure relates to a proton conductor, a film-electrode joined body, an electrochemical cell, and a fuel cell stack.

### Background Art

A solid oxide fuel cell (hereinafter referred to as the "SOFC") is a fuel cell in which a solid oxide is used for an electrolyte constituting an electrolyte film. As the solid oxide as the electrolyte, oxide ion conductors represented by stabilized zirconia are widely being used and have an advantage in that they have higher power generation efficiency than a polymer electrolyte fuel cell (PEFC).

A proton-conducting ceramic fuel cell (hereinafter referred to as the "PCFC"), a kind of the SOFC, has a feature of containing a solid oxide having proton conductivity for the electrolyte constituting the electrolyte film. In general SOFCs, water vapor is generated at a fuel electrode through a power generation reaction. For this reason, in an operating environment with a high fuel usage rate, hydrogen as a fuel is diluted with the water vapor, and the electromotive force of the fuel cell reduces or the risk of deterioration of the cell due to fuel exhaustion increases. Given these circumstances, general SOFCs cannot sufficiently increase the fuel usage rate.

Meanwhile, in the PCFC containing the proton conductor for the electrolyte, the generation of water vapor by the power generation reaction proceeds at an air electrode, thus inhibiting dilution of hydrogen at the fuel electrode. This can maintain the electromotive force of the fuel cell at a high level even when operated with a high fuel usage rate and can also reduce the risk of fuel exhaustion, thus providing an advantage in operation with a high fuel usage rate. The power generation efficiency of the fuel cell is represented by the product of the voltage of the cell and the fuel usage rate, and thus the PCFC, which can achieve both a high fuel usage rate and a high electromotive force, is expected to have a particularly high power generation efficiency among SOFCs. The ability of maintaining the high electromotive force also leads to the ability of operating the fuel cell with an increased current density, thus providing an advantage also in terms of higher output.

To aim at higher power generation efficiency and higher output in the PCFC, it is important to reduce the internal resistance of the cell during power generation, and for this purpose, it is important to improve the proton conductivity of the proton conductor used as the electrolyte.

As general proton conductors, materials in which the sites of Zr or Ce of each of BaZrO₃, BaCeO₃, and Ba(Ce,Zr)O₃, which have the perovskite structure, are partially substituted by metallic elements having +3 valence, such as yttrium (Y) or ytterbium (Yb), are used. It is known that these materials have relatively high proton conductivity. The BaZrO₃-based proton conductor in particular has relatively high chemical stability against CO₂ contained in a fuel gas of the fuel cell or the air and attracts attention. In the case of the BaZrO₃-based proton conductor, when Y is used as a substitution element, BaY₂NiO_{5-δ} (δ is the number of oxygen vacancies) as a by-product is likely to occur with NiO used for the fuel electrode at a high temperature. Note that δ represents the number of oxygen vacancies. The generation of BaY₂NiO_{5-δ} leads to a reduction in the performance and reliability of the fuel cell. In contrast, the use of Yb as the substitution element provides an advantage in that by-products are hard to occur. Thus, the material containing Yb as the substitution element in the BaZrO₃-based proton conductor is considered to be a promising material in practical use. If the proton conductivity can be further improved based on the Yb-substituted BaZrO₃, that provides an advantage to achieve the fuel cell having high power generation efficiency or high output density.

NPL 1 studies further addition of CuO for the Yb-substituted BaZrO₃. According to NPL 1, by adding 1.0 mol% of CuO to the Yb-substituted BaZrO₃, an effect of promoting the sintering of the Yb-substituted BaZrO₃ is produced.

### Citation List

### Non Patent Literature

NPL 1: J. Park et al., "Low temperature sintering of BaZrO3-based proton conductors for intermediate temperature solid oxide fuel cells", Solid State Ionics 181 163-167 (2010)

### Summary of Invention

### Technical Problem

According to NPL 1, by adding 1.0 mol% of CuO, the sinterability of the Yb-substituted BaZrO₃ improves, but the Yb-substituted BaZrO₃ substituted by 1.0 mol% of CuO obtained thereby reduces in proton conductivity compared to one that does not contain Cu.

An object of the present disclosure is to provide a proton conductor capable of being used for the PCFC and having improved proton conductivity.

### Solution to Problem

A proton conductor of the present disclosure contains a compound represented by a chemical formula BaₐZr_{1-x-y}YbₓCu_{y}O_{3-δ}, wherein 0.95 ≤ a ≤ 1.05, 0.1 ≤ x ≤ 0.4, 0.01 < y < 0.20, and 0 < δ ≤ 0.65 are satisfied.

### Advantageous Effects of Invention

The present disclosure provides a proton conductor capable of being used for the PCFC and having improved proton conductivity.

### Brief Description of Drawings

[Fig. 1] Fig. 1 illustrates a sectional view of an electrolyte film according to a second embodiment.
[Fig. 2] Fig. 2 illustrates a sectional view of a film-electrode joined body according to a third embodiment.
[Fig. 3] Fig. 3 illustrates a sectional view of an electrochemical cell according to a fourth embodiment.
[Fig. 4] Fig. 4 illustrates a fuel cell system including a fuel cell stack according to a fifth embodiment.
[Fig. 5] Fig. 5 is a flowchart illustrating a method for producing a pellet of a proton conductor according to examples and comparative examples.
[Fig. 6] Fig. 6 illustrates a procedure for producing an electrochemical cell of Example 6 using a proton conductor of Example 2.
[Fig. 7] Fig. 7 is a graph illustrating a current-voltage characteristic and a current-output characteristic of the electrochemical cell of Example 6.

### Description of Embodiments

### [Progress to Obtain one Embodiment of Present Disclosure]

In NPL 1, by adding 1.0 mol% of CuO, the sinterability of the Yb-substituted BaZrO₃ is improved. However, the Yb-substituted BaZrO₃ substituted by 1.0 mol% of Cu obtained thereby reduces in proton conductivity compared to one that does not contain Cu.

Given these circumstances, having conducted intensive studies on the substitution amount of Cu, the inventors have found that as to the substitution amount of Cu, a small amount, or 1.0 mol%, reduces the proton conductivity, whereas by increasing the substitution amount, the proton conductivity can be improved, that is, that the substitution amount of Cu has an optimum range. This has led to the present disclosure described below.

### [Embodiments of Present Disclosure]

Embodiments of the present disclosure will be described below with reference to the drawings.

### (First Embodiment)

A proton conductor according to a first embodiment contains a compound represented by a chemical formula BaₐZr_{1-x-y}YbₓCu_{y}O_{3-δ}. In the chemical formula, 0.95 ≤ a ≤ 1.05, 0.1 ≤ x ≤ 0.4, 0.01 < y < 0.20, and 0 < δ ≤ 0.65 are satisfied.

As demonstrated in Examples 1 to 5 described below, the proton conductor according to the first embodiment has improved proton conductivity. Specifically, the proton conductor according to the first embodiment has a higher proton conductivity than a compound that does not contain Cu in the chemical formula BaₐZr_{1-x-y}YbₓCu_{y}O_{3-δ}, that is, a compound in which y = 0. Consequently, when used for the PCFC, the proton conductor according to the first embodiment can achieve higher power generation efficiency and higher output in the PCFC.

In the chemical formula BaₐZr_{1-x-y}YbₓCu_{y}O_{3-δ}, 0.04 ≤ y ≤ 0.16 may be satisfied. By containing such a compound, the proton conductor according to the first embodiment has more improved proton conductivity. With this, when used for the PCFC, the proton conductor according to the first embodiment can achieve even higher power generation efficiency and even higher output in the PCFC.

In the chemical formula BaₐZr_{1-x-y}YbₓCu_{y}O_{3-δ}, 0.125 ≤ y ≤ 0.16 may be satisfied. By containing such a compound, the proton conductor according to the first embodiment has more improved proton conductivity. With this, when used for the PCFC, the proton conductor according to the first embodiment can achieve even higher power generation efficiency and even higher output in the PCFC.

In the chemical formula BaₐZr_{1-x-y}YbₓCu_{y}O_{3-δ}, 0.125 ≤ y ≤ 0.15 may be satisfied. By containing such a compound, the proton conductor according to the first embodiment has more improved proton conductivity. With this, when used for the PCFC, the proton conductor according to the first embodiment can achieve even higher power generation efficiency and even higher output in the PCFC.

In the chemical formula BaₐZr_{1-x-y}YbₓCu_{y}O_{3-δ}, y = 0.15 may be satisfied. By containing such a compound, the proton conductor according to the first embodiment has more improved proton conductivity. With this, when used for the PCFC, the proton conductor according to the first embodiment can achieve even higher power generation efficiency and even higher output in the PCFC.

The proton conductor according to the first embodiment can be synthesized by the citric acid complex method, the solid phase sintering method, the coprecipitation method, the nitrate method, or the spray granulation method.

The proton conductor according to the first embodiment is only required to contain the compound represented by the chemical formula BaₐZr_{1-x-y}YbₓCu_{y}O_{3-δ}. The proton conductor according to the first embodiment may contain the compound represented by the chemical formula BaₐZr_{1-x-y}YbₓCu_{y}O_{3-δ} in, for example, greater than or equal to 5% or greater than or equal to 20% in terms of molar ratio. When the proton conductor according to the first embodiment contains the compound represented by the chemical formula BaₐZr_{1-x-y}YbₓCu_{y}O_{3-δ} in the above range, the proton conductor according to the first embodiment can exhibit high proton conductivity.

The proton conductor according to the first embodiment may consist of the compound represented by the chemical formula BaₐZr_{1-x-y}YbₓCu_{y}O_{3-δ}. "The proton conductor according to the first embodiment consists of the compound represented by the chemical formula BaₐZr_{1-x-y}YbₓCu_{y}O_{3-δ}" means that the compound represented by the chemical formula BaₐZr_{1-x-y}YbₓCu_{y}O_{3-δ} is greater than or equal to 80% in terms of molar ratio in the proton conductor according to the first embodiment. When the proton conductor according to the first embodiment consists of the compound represented by the chemical formula BaₐZr_{1-x-y}YbₓCu_{y}O_{3-δ}, the proton conductor according to the first embodiment can exhibit higher proton conductivity.

As an example, the proton conductor according to the first embodiment may consist essentially of the compound represented by the chemical formula BaₐZn_{1-x-y}YbₓCu_{y}O_{3-δ}. "The proton conductor according to the first embodiment consists essentially of the compound represented by the chemical formula BaₐZr_{1-x-y}YbₓCu_{y}O_{3-δ}" means that the proton conductor according to the first embodiment consists only of the compound represented by the chemical formula BaₐZr_{1-x-y}YbₓCu_{y}O_{3-δ} except components contained as incidental impurities. In this case, in the proton conductor according to the first embodiment, the compound represented by the chemical formula BaZr_{(1-x-y)}YbₓSc_{y}O_{3-δ} may be greater than or equal to 95% in terms of molar ratio.

The proton conductor according to the first embodiment may contain other components other than the compound represented by the chemical formula BaₐZn_{1-x-y}YbₓCu_{y}O_{3-δ}. The proton conductor according to the first embodiment may further contain, for example, impurities produced in the process of synthesizing the compound described above or the like as the other components.

The average of the crystal grain size of the compound represented by the chemical formula BaₐZr_{1-x-y}YbₓCu_{y}O_{3-δ} contained in the proton conductor according to the first embodiment is, for example, greater than or equal to 0.1 µm and less than or equal to 10 µm. Even when the average of the crystal grain size is in the above range, or even when it is smaller than 0.1 µm, the proton conductor according to the first embodiment can achieve high proton conductivity. The average of the crystal grain size can be determined by, for example, using a median diameter (volume-based) obtained from the measurement of grain size distribution.

### (Second Embodiment)

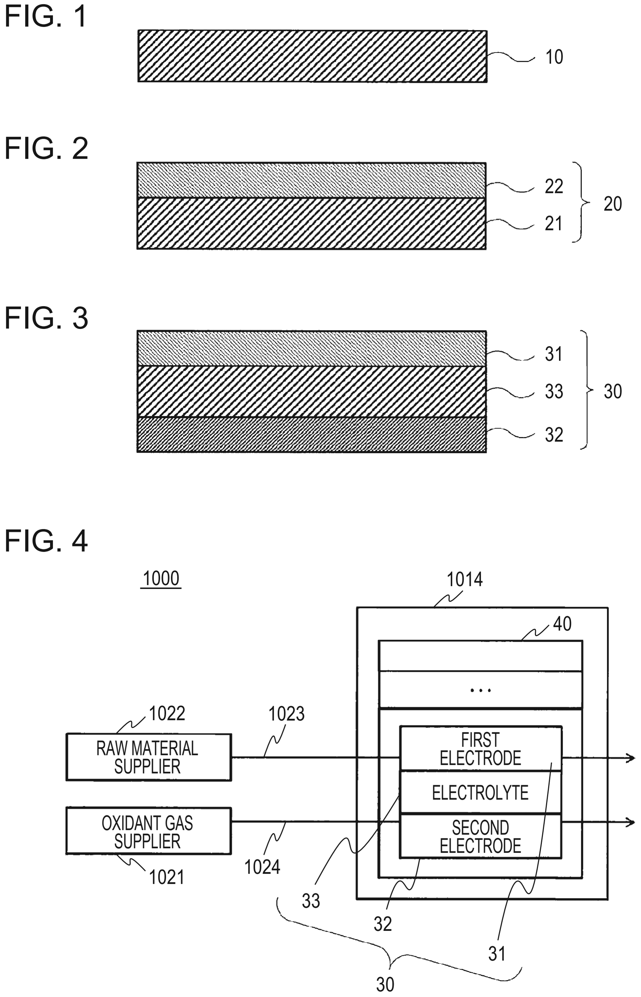

Fig. 1 illustrates a sectional view of an electrolyte film 10 according to a second embodiment. A proton conductor contained in the electrolyte film 10 is the proton conductor described in the first embodiment.

The proton conductor contained in the electrolyte film 10 according to the second embodiment has improved proton conductivity as described in the first embodiment. Thus, the electrolyte film 10 according to the second embodiment can have high proton conductivity. With this, when used for an electrolyte film of the PCFC, the electrolyte film 10 according to the second embodiment can achieve higher power generation efficiency and higher output in the PCFC.

The electrolyte film 10 contains the proton conductor described in the first embodiment as an electrolyte material. The electrolyte film 10 may further contain other compounds showing proton conductivity other than the compound represented by the chemical formula BaₐZr_{1-x-y}YbₓCu_{y}O_{3-δ}. Examples of the other compounds include a compound represented by a chemical formula BaZ₁₋ₓ₁M1ₓ₁O_{3-δ}, a compound represented by a chemical formula BaCe₁₋ₓ₂M2ₓ₂O_{3-δ}, and a compound represented by a chemical formula BaZr_{1-x3-y3}Ceₓ₃M3_{y3}O_{3-δ}. In these compounds, M1, M2, and M3 each contain at least one selected from the group consisting of Pr, Nd, Sm, Eu, Gd, Tb, Dy, Ho, Er, Tm, Yb, Y, Sc, In, and Lu, and 0 < x1 < 1, 0 < x2 < 1, 0 < x3 < 1, 0 < y3 < 1, and 0 < δ < 0.5 are satisfied. The electrolyte film 10 may further contain electrolyte materials other than the proton conductor.

The thickness of the electrolyte film 10 according to the second embodiment is not particularly limited and can be determined as appropriate in accordance with uses. As an example, the thickness of the electrolyte film 10 is, for example, 1 to 500 µm and may be 1 to 50 µm.

The electrolyte film 10 is produced by tape casting, spin coating, dip coating, sputtering, or pulse laser deposition (PLD).

### (Third Embodiment)

Fig. 2 illustrates a sectional view of a film-electrode joined body 20 according to a third embodiment. The film-electrode joined body 20 includes an electrolyte film 21 and an electrode 22 provided on the electrolyte film 21. The electrolyte film 21 of the film-electrode joined body 20 is the electrolyte film 10 described in the second embodiment.

As described in the second embodiment, the electrolyte film 21 of the film-electrode joined body 20 according to the third embodiment contains the proton conductor having improved proton conductivity. Thus, the electrolyte film 21 can have high proton conductivity. With this, when used for an electrode and the electrolyte film of the PCFC, the film-electrode joined body 20 according to the third embodiment can achieve higher power generation efficiency and higher output in the PCFC.

As described above, the electrolyte film 21 is the electrolyte film 10 described in the second embodiment, and thus a detailed description of the electrolyte film 21 is omitted here.

For the material constituting the electrode 22, an appropriate material can be selected in accordance with uses in which the film-electrode joined body 20 is used.

The film-electrode joined body 20 may be used as, for example, an electrode and an electrolyte film of a fuel cell or used as the electrode and the electrolyte film of the PCFC. Thus, for example, the electrode 22 may function as a fuel electrode or function as an air electrode.

When the electrode 22 of the film-electrode joined body 20 is used for, for example, the fuel electrode of the fuel cell, especially the fuel electrode of the PCFC, the electrode 22 may mainly contain, for example, at least one compound of the following:
(i) the electrolyte material contained in the electrolyte film 21 and a mixture of one or more metals selected from the group consisting of Co, Fe, Pt, and Pd and Ni (that is, cermet)
(ii) a complex oxide containing lanthanum
(iii) a complex oxide containing barium
(iv) a complex oxide containing strontium

"The electrode 22 mainly contains a certain compound" means that the mass ratio of the compound in the electrode 22 is the highest.

When the electrode 22 of the film-electrode joined body 20 is used for, for example, the air electrode of the fuel cell, especially the air electrode of the PCFC, the electrode 22 contains, for example, a complex compound. In this case, the electrode 22 may mainly contain, for example, a lanthanum-strontium-cobalt oxide, a lanthanum-strontium-cobalt-iron oxide, a lanthanum-barium-cobalt oxide, a barium-strontium-cobalt-iron oxide, or the like. In this case, the electrode 22 may be formed on the electrolyte film 21 by, for example, screen printing.

The electrode 22 has a thickness of, for example, 1 µm to 1,000 µm. When the electrode 22 also functions as a support of the cell, the electrode 22 desirably has a thickness of 100 µm to 700 µm. When a component other than the electrode 22 is the support of the cell, the electrode 22 desirably has a thickness of 10 µm to 50 µm.

In Fig. 2, the electrolyte film 21 and the electrode 22 are in contact with each other, but another layer may be provided between the electrolyte film 21 and the electrode 22. Examples of the other layer include a functional layer. The functional layer is a layer promoting movement of electrons or protons between the electrolyte film 21 and the electrode 22. The functional layer is formed of, for example, a composite of cermet and a complex oxide.

### (Fourth Embodiment)

Fig. 3 illustrates a sectional view of an electrochemical cell 30 according to a fourth embodiment.

The electrochemical cell 30 according to the fourth embodiment includes a first electrode 31, a second electrode 32, and an electrolyte film 33. The electrolyte film 33 is provided between the first electrode 31 and the second electrode 32. In other words, as illustrated in Fig. 3, in the electrochemical cell 30, the first electrode 31, the electrolyte film 33, and the second electrode 32 are provided in this order. The electrolyte film 33 of the electrochemical cell 30 is the electrolyte film 10 described in the second embodiment.

As described in the second embodiment, the electrolyte film 33 of the electrochemical cell 30 according to the fourth embodiment contains the proton conductor having improved proton conductivity. Thus, the electrolyte film 33 can have high proton conductivity. With this, when used as, for example, the PCFC, the electrochemical cell 30 according to the fourth embodiment can achieve higher power generation efficiency and higher output in the PCFC.

As described above, the electrolyte film 33 of the electrochemical cell 30 is the electrolyte film 10 described in the second embodiment. Thus, a detailed description of the electrolyte film 33 is omitted here.

The electrochemical cell 30 according to the fourth embodiment may be used as the fuel cell or used as the PCFC, for example. Thus, for example, the first electrode 31 may function as the fuel electrode, and the second electrode 32 may function as the air electrode.

When the first electrode 31 functions as the fuel electrode of the fuel cell such as the PCFC, the material used for the first electrode 31 is as described as the material when the electrode 22 is used as the fuel electrode in the third embodiment.

When the second electrode 32 functions as the air electrode of the fuel cell such as the PCFC, the material used for the second electrode 32 is as described as the material when the electrode 22 is used as the air electrode in the third embodiment.

As illustrated in Fig. 3, the first electrode 31 and the second electrode 32 are each provided in contact with the electrolyte film 33. However, another layer may be provided between the first electrode 31 and the electrolyte film 33. In addition, another layer may be provided between the second electrode 32 and the electrolyte film 33. Examples of the other layer include a functional layer. The functional layer is the same as the functional layer described in the third embodiment.

The electrochemical cell 30 can be used for fuel cells, electrochemical hydrogen pumps, hydrogen sensors, and water electrolysis apparatuses.

### (Fifth Embodiment)

Fig. 4 illustrates a fuel cell system 1000 including a fuel cell stack 40 according to a fifth embodiment.

The fuel cell stack 40 includes a plurality of the electrochemical cells 30. The electrochemical cells 30 are stacked on each other to form the fuel cell stack 40. The electrochemical cell 30 is described in the fourth embodiment.

In the fuel cell system 1000 according to the fifth embodiment, the electrochemical cells 30 are used as fuel cells. Thus, in this case, the first electrode 31 functions as the fuel electrode, and the second electrode 32 functions as the air electrode.

The fuel cell system 1000 further includes a raw material gas supply path 1023 and an oxidant gas supply path 1024. The raw material gas supply path 1023 is connected to the first electrode 31 and a raw material supplier 1022. The oxidant gas supply path 1024 is connected to the second electrode 32 and an oxidant gas supplier 1021.

As described in the third embodiment, the electrochemical cell 30 can achieve higher power generation efficiency and higher output in the PCFC. Thus, the fuel cell stack 40 can achieve high power generation efficiency and high output as a fuel cell stack.

The fuel cell stack 40 is housed in, for example, a housing 1014.

The housing 1014 may be formed of a heat-insulating member.

An oxidant gas is supplied to the second electrodes 32 of the stacked electrochemical cells 30. Specifically, the oxidant gas is supplied from the oxidant gas supplier 1021 through the oxidant gas supply path 1024 to the second electrodes 32 (that is, cathodes) of the electrochemical cells 30.

In the second electrodes 32, Reaction (1) below proceeds:

O₂ + 4H⁺ + 4e⁻ → 2H₂O (1)

The oxidant gas is, for example, air.

A raw material is supplied from the raw material supplier 1022 through the raw material gas supply path 1023 to the first electrodes 31 of the electrochemical cells 30.

In the first electrodes 31, Reaction (2) below proceeds:

2H₂ → 4H⁺ +4e⁻ (2)

The raw material is, for example, hydrogen molecules.

Hydrogen may be generated through a modification reaction. Alternatively, hydrogen may be generated through water electrolysis.

Thus, the fuel cell system 1000 operates. The fuel cell system 1000 then generates power.

### [Other Embodiments]

### (Note)

The following techniques are disclosed by the description of the above embodiments.

### (Technique 1)

A proton conductor containing a compound represented by a chemical formula BaₐZr_{1-x-y}YbₓCu_{y}O_{3-δ}, wherein 0.95 ≤ a ≤ 1.05, 0.1 ≤ x ≤ 0.4, 0.01 < y < 0.20, and 0 < δ ≤ 0.65 are satisfied.

With this configuration, the proton conductor according to Technique 1 has improved proton conductivity. Consequently, when used for the PCFC, the proton conductor according to Technique 1 can achieve higher power generation efficiency and higher output in the PCFC.

### (Technique 2)

The proton conductor according to Technique 1, wherein in the chemical formula, 0.04 ≤ y ≤ 0.16 is satisfied.

With this configuration, when used for the PCFC, the proton conductor according to Technique 2 can achieve even higher power generation efficiency and even higher output in the PCFC.

### (Technique 3)

The proton conductor according to Technique 2, wherein in the chemical formula, 0.125 ≤ y ≤ 0.16 is satisfied.

With this configuration, when used for the PCFC, the proton conductor according to Technique 3 can achieve even higher power generation efficiency and even higher output in the PCFC.

### (Technique 4)

The proton conductor according to Technique 3, wherein in the chemical formula, 0.125 ≤ y ≤ 0.15 is satisfied.

With this configuration, when used for the PCFC, the proton conductor according to Technique 4 can achieve even higher power generation efficiency and even higher output in the PCFC.

### (Technique 5)

The proton conductor according to Technique 4, wherein in the chemical formula, y = 0.15 is satisfied.

With this configuration, when used for the PCFC, the proton conductor according to Technique 5 can achieve even higher power generation efficiency and even higher output in the PCFC.

### (Technique 6)

An electrolyte film containing the proton conductor according to any one of Techniques 1 to 5.

With this configuration, when used for an electrolyte film of the PCFC, the electrolyte film according to Technique 6 can achieve higher power generation efficiency and higher output in the PCFC.

### (Technique 7)

A film-electrode joined body including:
the electrolyte film according to Technique 6; and
an electrode provided on the electrolyte film.

With this configuration, when used for an electrode and the electrolyte film of the PCFC, the film-electrode joined body according to Technique 7 can achieve higher power generation efficiency and higher output in the PCFC.

### (Technique 8)

An electrochemical cell including:
a first electrode;
a second electrode; and
the electrolyte film according to Technique 6 provided between the first electrode and the second electrode.

With this configuration, when used as, for example, the PCFC, the electrochemical cell according to Technique 8 can achieve higher power generation efficiency and higher output in the PCFC.

### (Technique 9)

A fuel cell stack including a plurality of the electrochemical cells according to Technique 8.

With this configuration, the fuel cell stack according to Technique 9 can achieve high power generation efficiency and high output.

### EXAMPLES

The present disclosure will be described below in more detail with reference to the following examples and comparative examples.

### <Proton Conductor>

As described below, in Examples 1 to 5 and Comparative Examples 1 to 5, proton conductors were produced. For each of the proton conductors, proton conductivity was evaluated.

### [EXAMPLE 1]

### (Production of Pellet for Evaluation of Proton Conductor)

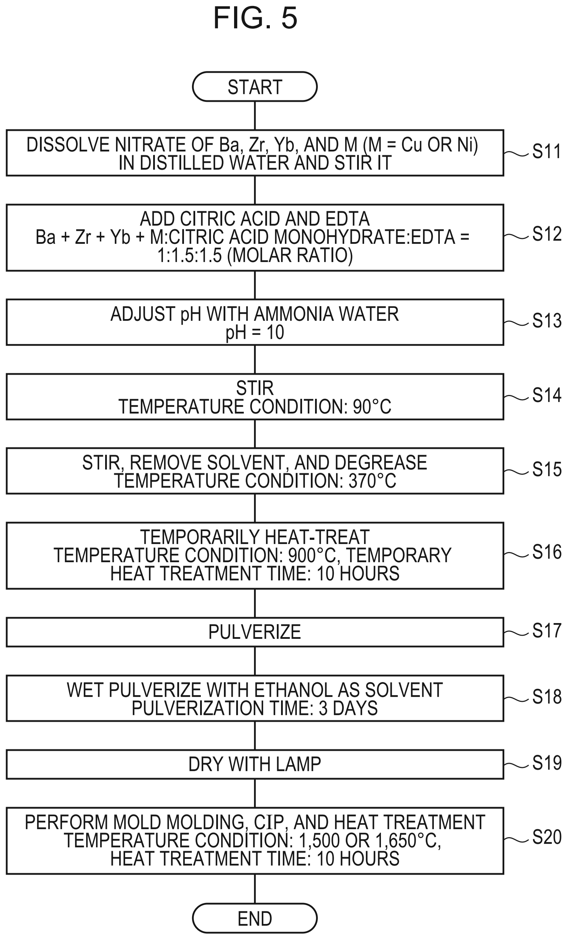

Fig. 5 is a flowchart illustrating a method for producing a pellet of the proton conductor by the examples and the comparative examples. The following describes production of the pellet for evaluation of the proton conductor with reference to Fig. 5.

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.076 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.004 mol

The starting materials were added to 1,000 mL of distilled water and dissolved therein to obtain a mixed liquid, and the mixed liquid was stirred (S11).

Next, to the mixed liquid, 0.3 mol of citric acid (manufactured by FUJIFILM Wako Pure Chemical Corporation) and 0.3 mol of ethylenediaminetetraacetic acid (manufactured by FUJIFILM Wako Pure Chemical Corporation) were added (S12). Hereinafter "ethylenediaminetetraacetic acid" will be called "EDTA."

Next, ammonia water (28% by mass, manufactured by Kishida Chemical Co., Ltd.) was added to the mixed liquid, and the pH of the mixed liquid was adjusted to 10 using a pH meter (manufactured by Horiba, Ltd.) (S13).

Next, the mixed liquid was stirred at a temperature of 90°C (S14).

The temperature of the mixed liquid was raised up to 370°C using a hot stirrer to perform evaporation of water as a solvent and degreasing (S15). With this, a black solid was obtained.

The obtained solid was transferred into a crucible and was temporarily heat-treated in the air at 900°C for 10 hours (S16).

The temporarily heat-treated powder was pulverized (S17). Next, the pulverized powder was transferred to a plastic container together with zirconia balls.

To the plastic container, 100 g of ethanol (manufactured by Kanto Chemical Co., Inc.) was added. The thus obtained mixed liquid was pulverized with a ball mill for 72 hours (S18).

After pulverization with the ball mill, the mixed liquid was dried using a lamp to remove ethanol from the mixed liquid (S19). Thus, powder was obtained.

Next, the obtained powder was pressed into a cylindrical shape using a hydraulic pump (manufactured by Enerpac Co., Ltd.) and a powder molding mold having a diameter of 20 millimeters and was further formed into a pellet with a cold hydrostatic press (manufactured by Sansho Industry Co., Ltd.) at a press pressure of 250 MPa. The obtained cylindrical pellet was fully heat-treated in an oxygen atmosphere at 1,500°C for 10 hours (S20). With this, a sintered body pellet of the proton conductor was obtained.

The obtained sintered body pellet was cut into a disc with a thickness of about 500 µm using a low-speed cutter (IsoMet 4000). Thus, a pellet for evaluation was obtained. Ethanol was dropped onto a piece of #500 emery paper, and both faces of the pellet for evaluation were polished with it.

Subsequently, a Ag paste (manufactured by Tanaka Kikinzoku Kogyo) was applied to the polished both faces of the pellet for evaluation by screen printing. The applied Ag paste had a diameter of 8 mm.

The pellet for evaluation to which the Ag paste has been applied was heat-treated in the atmosphere at 900°C for 1 hour. Thus, a pellet for evaluation according to Example 1 was produced.

### (Evaluation of Proton Conductivity)

Using the pellet for evaluation according to Example 1, the proton conductivity of the proton conductor was calculated from the resistance of the pellet and the thickness of the pellet. The resistance of the pellet was measured based on the AC impedance method. The method for determining the proton conductivity was as follows.

Using an LCR meter (IM2526 manufactured by Hioki E.E. Corporation), an AC signal was applied to the pellet in a frequency range of 8 MHz to 4 Hz with an amplitude of 10 mV. This measurement was performed at 700°C in a 1.9%-humidified, 1%-hydrogen, and nitrogen-diluted gas atmosphere. Then, a Cole-Cole plot was output. Based on an arc of the output Cole-Cole plot, points of intersection of the arc and a real number axis were determined. The real number axis is an axis at which the value of the Y axis in the graph of the Cole-Cole plot was zero. A point of intersection of the arc on the highfrequency side was determined to be the resistance of the pellet.

Based on the determined resistance and the thickness of the pellet, the proton conductivity of the proton conductor was calculated.

### [EXAMPLE 2]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.075 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.005 mol

The rest of the procedure was the same as that of Example 1.

### (Evaluation of Proton Conductivity)

The proton conductor of Example 2 was evaluated in the same manner as in Example 1.

### [EXAMPLE 3]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.0675 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.0125 mol

The rest of the procedure was the same as that of Example 1.

### (Evaluation of Proton Conductivity)

The proton conductor of Example 3 was evaluated in the same manner as in Example 1.

### [EXAMPLE 4]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.065 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.015 mol

The rest of the procedure was the same as that of Example 1.

### (Evaluation of Proton Conductivity)

The proton conductor of Example 4 was evaluated in the same manner as in Example 1.

### [EXAMPLE 5]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.064 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.016 mol

The rest of the procedure was the same as that of Example 1.

### (Evaluation of Proton Conductivity)

The proton conductor of Example 5 was evaluated in the same manner as in Example 1.

### [COMPARATIVE EXAMPLE 1]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.08 mol
Yb(NO₃)₃·3H₂O (manufactured by Mitsuwa Chemicals Co., Ltd.) 0.02 mol

The heat-treatment temperature of the pellet was set at 1,650°C. The rest of the procedure was the same as that of Example 1.

### (Evaluation of Proton Conductivity)

The proton conductor of Comparative Example 1 was evaluated in the same manner as in Example 1.

### [COMPARATIVE EXAMPLE 2]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.079 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.001 mol

The rest of the procedure was the same as that of Example 1.

### (Evaluation of Proton Conductivity)

The proton conductor of Comparative Example 2 was evaluated in the same manner as in Example 1.

### [COMPARATIVE EXAMPLE 3]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.06 mol
Yb(NO₃)₃·3H₂O (manufactured by Mitsuwa Chemicals Co., Ltd.) 0.02 mol
Cu(NO₃)₂·3H₂O (manufactured by FUJIFILM Wako Pure Chemical Corporation) 0.02 mol

The rest of the procedure was the same as that of Example 1.

### (Evaluation of Proton Conductivity)

The proton conductor of Comparative Example 3 was evaluated in the same manner as in Example 1.

### [COMPARATIVE EXAMPLE 4]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.0725 mol
Yb(NO₃)₃·3H₂O (manufactured by Mitsuwa Chemicals Co., Ltd.) 0.02 mol
Ni(NO₃)₂·3H₂O (manufactured by FUJIFILM Wako Pure Chemical Corporation) 0.0075 mol

The rest of the procedure was the same as that of Example 1.

### (Evaluation of Proton Conductivity)

The proton conductor of Comparative Example 4 was evaluated in the same manner as in Example 1.

### [COMPARATIVE EXAMPLE 5]

### (Production of Pellet for Evaluation of Proton Conductor)

The following materials were prepared as starting materials of the proton conductor:
Ba(NO₃)₂ (manufactured by FUJIFILM Wako Pure Chemical Corporation) 0.1 mol
ZrO(NO₃)₂·2H₂O (manufactured by Kanto Chemical Co., Inc.) 0.065 mol
Yb(NO₃)₃·3H₂O (manufactured by Mitsuwa Chemicals Co., Ltd.) 0.02 mol
Ni(NO₃)₂·3H₂O (manufactured by FUJIFILM Wako Pure Chemical Corporation) 0.015 mol

The rest of the procedure was the same as that of Example 1.

### (Evaluation of Proton Conductivity)

The proton conductor of Comparative Example 5 was evaluated in the same manner as in Example 1.

Table 1 summarizes the proton conductivity measured for Examples 1 to 5 and Comparative Examples 1 to 5.

**[Table 1]**

| | BaₐZr_{0.8-y}Yb_{0.2}M_{y}O_{3-δ} | | Proton conductivity [S/cm] |
|---|---|---|---|
| | M | y | |
| Example 1 | Cu | 0.04 | 0.012 |
| Example 2 | Cu | 0.05 | 0.013 |
| Example 3 | Cu | 0.125 | 0.013 |
| Example 4 | Cu | 0.15 | 0.019 |
| Example 5 | Cu | 0.16 | 0.010 |
| Comparative Example 1 | - | 0 | 0.008 |
| Comparative Example 2 | Cu | 0.01 | 0.007 |
| Comparative Example 3 | Cu | 0.20 | 0.007 |
| Comparative Example 4 | Ni | 0.075 | 0.001 |
| Comparative Example 5 | Ni | 0.15 | 0.004 |

The proton conductivity of the proton conductor of each of Examples 1 to 5 was 0.012 S/cm, 0.013 S/cm, 0.013 S/cm, 0.019 S/cm, and 0.010 S/cm. The proton conductivity of Comparative Example 1 was 0.008 S/cm. It was found from this that the proton conductors of Examples 1 to 5 improved in the proton conductivity.

In the case of the addition amount of Cu y = 0.01 shown in Comparative Example 2, the proton conductivity was 0.007 S/cm. Thus, in the case of the addition amount of Cu y = 0.01, the proton conductivity reduced compared to a case in which Cu was not added. This result reproduced the result of NPL 1. It was found that by making the value of y, or the addition amount of Cu, larger than 0.01, an effect of improving the proton conductivity was obtained.

In the case of the addition amount of Cu y = 0.20 shown in Comparative Example 3, the proton conductivity was 0.007 S/cm. Thus, in the case of the addition amount of Cu y = 0.20 too, the proton conductivity reduced compared to the case in which Cu was not added. It was found that by making the value of y, or the addition amount of Cu, smaller than 0.20, an effect of improving the proton conductivity was obtained.

That is, it was found that the addition amount of Cu y had an optimum range in which the proton conductivity improved. Specifically, it was found that the compound in which Cu was added such that y satisfied 0.01 < y < 0.20 in the chemical formula BaₐZr_{1-x-y}YbₓCu_{y}O_{3-δ} improved in the proton conductivity. It was found that when y = 0.15 shown in Example 4 in particular, the proton conductivity increased.

For Comparative Example 4 and Comparative Example 5, Ni was used instead of Cu as an added element. In Comparative Example 4 and Comparative Example 5, the addition amount of Ni was y = 0.075 and y = 0.15, respectively. The proton conductivity of Comparative Example 4 and Comparative Example 5 was 0.001 S/cm and 0.004 S/cm, respectively, and the proton conductivity reduced compared to a case in which Ni was not added (that is, Comparative Example 1). It was found that although y = 0.075 and Y = 0.15 were in the range about the addition amount in which the proton conductivity improved when Cu was added, the proton conductivity did not improve in the case of Ni. Thus, it was found that the effect of improving the proton conductivity was unique to the case when Cu was added.

Although no mechanism has been made clear for these phenomena, the proton conductivity is represented by the product of the number of protons as conductive carriers and mobility, and thus either or both of them improved. The number of protons is namely the dissolution amount of water in a crystal lattice. The dissolution of water proceeds by water molecules filling oxygen vacancies in crystals, and thus the crystal lattice having more oxygen vacancies is more advantageous. When Cu is added, Cu has a valence number lower than +4 valence of Zr, and thus the number of oxygen vacancies increases in order to strike a balance of charges in the crystals. Thus, it is considered that the larger the addition amount of Cu, the larger the number of oxygen vacancies. Thus, theoretically, the addition of Cu is advantageous for proton dissolution, and there is a possibility that the proton dissolution amount will increase.

However, in Comparative Example 2 and Comparative Example 3, the proton conductivity reduced even though Cu was added. In Comparative Example 4 and Comparative Example 5, in which Ni was added, the proton conductivity reduced even though it is thought that Ni also has a valence number lower than +4 valence of Zr and thus increases the number of oxygen vacancies. From these, it is inferred that mobility, which is another factor of the proton conductivity, reduced. The amount of the added element differs in the local strain state or the electronic state of the crystal lattice by the type of the element. It is considered that the proton conductivity reduced in Comparative Example 2 to Comparative Example 5 because when the strain state or the electronic state differed, influences on mobility also changed, in which, for example, protons were locally trapped. It is considered for Example 1 to Example 5 that the reduction in mobility was inhibited or mobility was improved.

In Examples 1 to 5, the effect by adding Cu was confirmed in the case of x = 0.2 in the chemical formula BaₐZr_{1-x-y}YbₓCu_{y}O_{3-δ}. The proton conductor in which x satisfied 0.1 ≤ x ≤ 0.4 and y satisfied 0.01 < y < 0.20 in the above chemical formula similarly produced an effect of improving the proton conductivity.

### <Electrochemical Cell>

### [EXAMPLE 6]

### (Production of Electrochemical Cell)

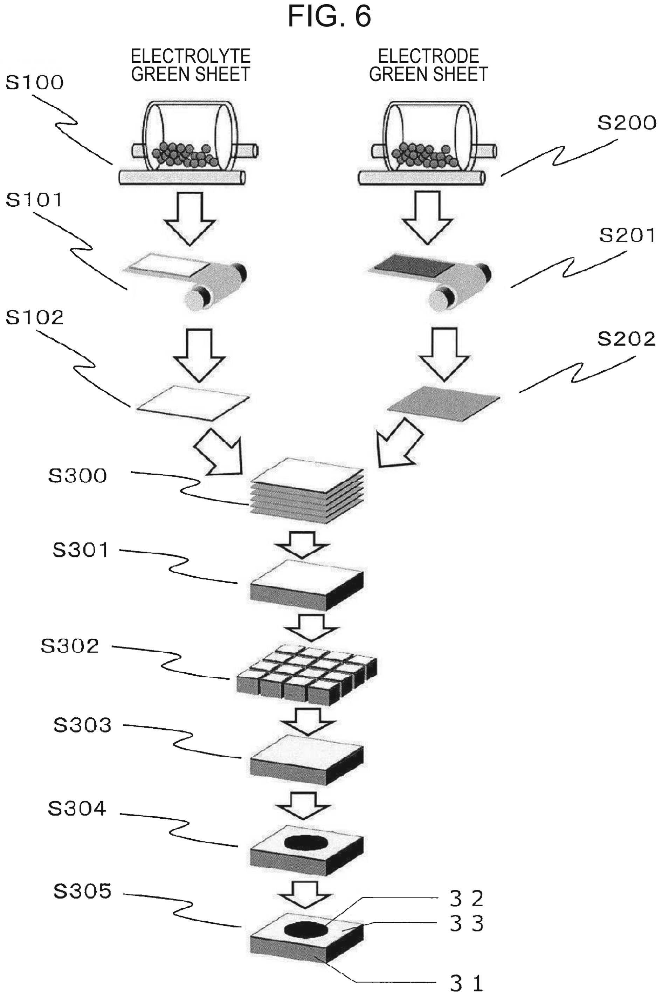

The following describes an electrolyte film and production of an electrochemical cell using the same with reference to Fig. 6. Fig. 6 illustrates a procedure for producing an electrochemical cell of Example 6 using the proton conductor of Example 2.

### (1) Production of Electrolyte Green Sheet (refer to S100 to S102)

First, an electrolyte ceramic slurry was prepared. For a proton conductor for use in the electrolyte ceramic slurry, the proton conductor of Example 2 was used. However, there was a difference in that heat treatment was performed in the air at 1,200°C for 10 hours instead of the process of mold molding, CIP, and heat treatment in S20 shown in the flowchart in Fig. 5. By performing the heat treatment in the air at 1,200°C for 10 hours, powder of the proton conductor was obtained.

Including the produced powder of the proton conductor (BaZr_{0.75}Yb_{0.20}Cu_{0.05}O_{3-δ}), the following materials were mixed together.

The proton conductor of Example 2 (BaZr_{0.75}Yb_{0.20}Cu_{0.05}O_{3-δ}) 50 g
Polyvinyl butyral (manufactured by Sekisui Chemical Co., Ltd.) 5 g
Butyl benzyl phthalate (manufactured by Kanto Chemical Co., Inc.) 1.25 g
A mixed solvent 40 g

The mixed solvent was constituted by butyl acetate (20 g, manufactured by Kanto Chemical Co., Inc.) and 1-butanol (20 g, manufactured by Kanto Chemical Co., Inc.). Thus, the electrolyte ceramic slurry was prepared.

Next, a film formed of the electrolyte ceramic slurry was formed on a support sheet formed of a polyethylene terephthalate film having a thickness of about 50 µm by doctor blading. The obtained film formed of the slurry was heated at a temperature of 80°C to evaporate the solvent. Thus, an electrolyte green sheet was produced. The electrolyte green sheet had a thickness of about 21 µm.

### (2) Production of Electrode Green Sheet (refer to S200 to S202)

An electrode ceramic slurry was prepared by mixing together the following materials.

For a proton conductor for use in an electrode, the proton conductor of Comparative Example 1 (BaZr_{0.80}Yb_{0.20}O_{3-δ}) was used. However, there was a difference in that heat treatment was performed in the air at 1,200°C for 10 hours instead of the process of mold molding, CIP, and heat treatment in S20 shown in the flowchart in Fig. 5. By performing the heat treatment in the air at 1,200°C for 10 hours, powder of the proton conductor was obtained.

The proton conductor of Comparative Example 1 (BaZr_{0.80}Yb_{0.20}O_{3-δ}) 10 g
Polyvinyl butyral (manufactured by Sekisui Chemical Co., Ltd.) 5 g
Butyl benzyl phthalate (manufactured by Kanto Chemical Co., Inc.) 1.25 g
NiO (manufactured by Sumitomo Metal Mining Co., Ltd.) 40 g
A mixed solvent 40 g

The mixed solvent was constituted by butyl acetate (20 g, manufactured by Kanto Chemical Co., Inc.) and 1-butanol (20 g, manufactured by Kanto Chemical Co., Inc.).

Next, a film formed of the electrode ceramic slurry was formed on a support sheet formed of a polyethylene terephthalate film having a thickness of about 50 µm by doctor blading. The film formed of the slurry had a thickness of about 30 µm. The obtained film formed of the slurry was heated at a temperature of 80°C. Thus, an electrode green sheet was produced.

### (3) Stacking of Sheets (refer to S300 to S303)

The electrolyte green sheet was cut to obtain one cut electrolyte green sheet. Next, the polyethylene terephthalate film was peeled off from the electrolyte green sheet. The one cut electrolyte green sheet had a size of 140 mm × 140 mm. The electrode green sheet was cut to obtain one cut electrode green sheet. The one cut electrode green sheet had a size of 140 mm × 140 mm.

A plurality of the cut electrode green sheets were stacked on each other to obtain a stacked body. Subsequently, the stacked body was hot-pressed. The hot pressing was performed under the conditions of 85°C and 13 MPa. Thus, a first electrode was produced.

Furthermore, one cut electrolyte green sheet was stacked on one principal face of the first electrode to obtain a stacked body. The obtained stacked body was hot-pressed. The hot pressing was performed under the conditions of 80°C and 13 MPa. Thus, a molded body was produced.

The obtained molded body was further pressed (manufactured by Sansho Industry Co., Ltd.) at a pressure of 50 MPa to obtain a stacked body. The thickness, which hardly changed, was about 700 µm.

The stacked body was cut into a size with a diameter of 25 mm.

Finally, the cut stacked body was heat-treated in the atmosphere at 1,475°C for 2 hours. Thus, a film-electrode joined body was produced. The film-electrode joined body was a joined body of the electrolyte film and the first electrode.

### (4) Formation of Second Electrode (refer to S304 and S305)

Furthermore, a second electrode was provided on the obtained film-electrode joined body.

An LSC paste (manufactured by Noritake Co., Limited, composition: La_{0.6}Sr_{0.4}CoO_{3-δ}) was applied to one principal face of the film-electrode joined body on which the electrolyte film was exposed by screen printing. The applied LSC paste had a diameter of 10 mm. Thus, a cell precursor was obtained.

Then, the cell precursor was heat-treated in the atmosphere at 950°C for 2 hours. Thus, an electrochemical cell including the first electrode, the electrolyte film, and the second electrode was produced. The first electrode functioned as a fuel electrode. The second electrode functioned as an air electrode.

### (Evaluation of Electrochemical Cell)

Hydrogen and air were supplied to the electrochemical cell obtained by the method described above, and a power generation test on the fuel cell was conducted.

The produced electrochemical cell was set in a fuel cell holder (manufactured by Chino Corporation), which was set in an electric furnace. The fuel cell holder was heated until its temperature became 700°C, and at 700°C, a hydrogen gas humidified at 20°C was supplied to the fuel electrode (NiO-BaZr_{0.80}Yb_{0.20}O_{3-δ}) and an air gas humidified at 20°C was supplied to the air electrode at 100 cc/min each to perform reduction of the fuel electrode for 3 hours. Subsequently, the electric furnace temperature was set at 700°C, 600°C, 500°C, 400°C, and 300°C in this order, and after stability at each temperature was confirmed, an electrochemical evaluation was performed using a potentiogalvanostat (Modulab XM ECS manufactured by AMETEC, Inc.).

In the electrochemical evaluation, for the voltage of the fuel electrode and the air electrode, potential sweeping was performed from an open circuit voltage to 0.4 V at 4 mV/sec to acquire a current-voltage curve and a current-output curve.

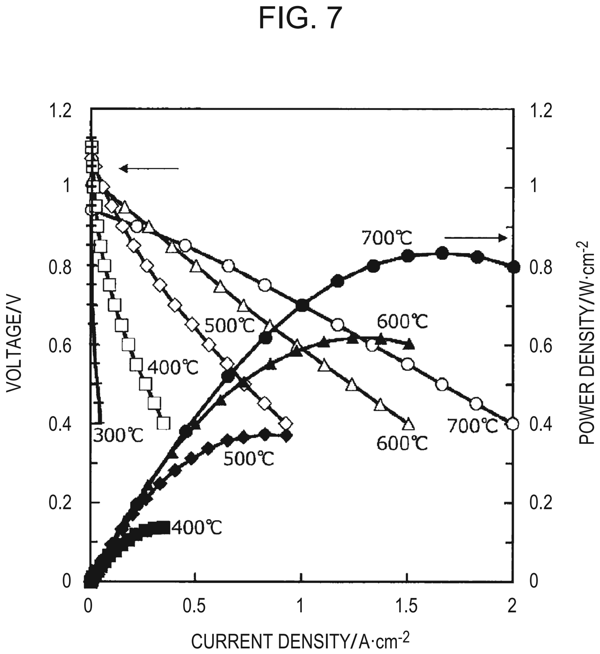

Fig. 7 illustrates the current-voltage curve and the current-output curve obtained in the electrochemical evaluation. The obtained maximum output was 0.83 W/cm², 0.62 W/cm², 0.37 W/cm², 0.14 W/cm², and 0.02 W/cm² at 700°C, 600°C, 500°C, 400°C, and 300°C, respectively, and it was confirmed that a current was able to be extracted as the electrochemical cell by using the proton conductor of the present disclosure for the electrolyte.

### Industrial Applicability

The proton conductor according to the present disclosure is suitable for systems using electrochemical cells of hydrogen generation systems or fuel cell systems. The film-electrode joined body according to the present disclosure can also be used for electrochemical hydrogen pumps for hydrogen purification apparatuses, hydrogen compression apparatuses, and the like. Reference Signs List

10 electrolyte film
20 film-electrode joined body
21 electrolyte film
22 electrode
30 electrochemical cell
31 first electrode
32 second electrode
33 electrolyte film
40 fuel cell stack
1000 fuel cell system
1014 housing
1021 oxidant gas supplier
1022 raw material supplier
1023 raw material gas supply path
1024 oxidant gas supply path

## Claims

1. A proton conductor comprising a compound represented by a chemical formula BaₐZr_{1-x-y}YbₓCu_{y}O_{3-δ}, wherein 0.95 ≤ a ≤ 1.05, 0.1 ≤ x ≤ 0.4, 0.01 < y < 0.20, and 0 < δ ≤ 0.65 are satisfied.

2. The proton conductor according to claim 1, wherein in the chemical formula, 0.04 ≤ y ≤ 0.16 is satisfied.

3. The proton conductor according to claim 2, wherein in the chemical formula, 0.125 ≤ y ≤ 0.16 is satisfied.

4. The proton conductor according to claim 3, wherein in the chemical formula, 0.125 ≤ y ≤ 0.15 is satisfied.

5. The proton conductor according to claim 4, wherein in the chemical formula, y = 0.15 is satisfied.

6. An electrolyte film comprising the proton conductor according to any one of claims 1 to 5.

7. A film-electrode joined body comprising:
the electrolyte film according to claim 6; and
an electrode provided on the electrolyte film.

8. An electrochemical cell comprising:
a first electrode;
a second electrode; and
the electrolyte film according to claim 6 provided between the first electrode and the second electrode.

9. A fuel cell stack comprising a plurality of the electrochemical cells according to claim 8.
